Europäisches Patentamt

European Patent Office

Office européen des brevets

(19)

(11) Numéro de publication : **0 153 232**
**B1**

(12) **FASCICULE DE BREVET EUROPÉEN**

(45) Date de publication du fascicule du brevet :
01.02.89

(51) Int. Cl.⁴ : **C 03 C 27/04**

(21) Numéro de dépôt : **85400221.9**

(22) Date de dépôt : **11.02.85**

(54) **Procédé de scellement étanche et étuvable d'objets métalliques sur un corps en matériau vitrocéramique.**

(30) Priorité : **15.02.84 FR 8402302**

(43) Date de publication de la demande :
**28.08.85 Bulletin 85/35**

(45) Mention de la délivrance du brevet :
**01.02.89 Bulletin 89/05**

(84) Etats contractants désignés :
**BE DE GB NL**

(56) Documents cités :
**DE—A— 2 556 279**
**FR—A— 2 183 213**
**US—A— 4 273 282**
**CHEMICAL ABSTRACTS, vol. 97, no. 12, septembre 1982, page 307, no. 97008x, Columbus, Ohio, US; M.G. NICHOLAS et al.: "The fabrication of steel-alumina joints by diffusion bonding" & PROC. BR. CERAM. SOC. 1982, 32, 33-40**

(73) Titulaire : **QUANTEL S.A.**
**Avenue de l'Atlantique Z.A. de Courtaboeuf BP 23**
**F-91941 Les Ulis Orsay Cedex (FR)**

**SOCIETE FRANCAISE D'EQUIPEMENTS POUR LA NAVIGATION AERIENNE (S.F.E.N.A.)**
**B.P. 59 Aérodrome de Villacoublay**
**F-78140 Velizy Villacoublay (FR)**

(72) Inventeur : **Roland, Jean-Jacques**
**35, rue du Lycée**
**F-92330 Sceaux (FR)**
Inventeur : **Lascar, Guy**
**4, Allée des Peupliers Résidence La Libération**
**F-91380 Chilly Mazarin (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

La présente invention est relative au scellement étanche étuvable d'objets métalliques sur un corps en matériau vitrocéramique et se rapporte à un tel procédé destiné à la fabrication de lasers à gaz, notamment pour gyromètres à laser.

Les gyromètres laser sont des lasers en anneau dont la structure est définie par un bloc en matériau vitrocéramique à très faible coefficient de dilatation thermique, commercialisé par exemple sous l'appellation zérodur®.

Les miroirs au nombre de trois ou quatre, formant la cavité résonnante en anneau, ainsi que les électrodes métalliques (une cathode, deux anodes), sont fixés sur le bloc en vitrocéramique usiné.

Les miroirs, dont le substrat est également en matériau vitrocéramique, sont généralement fixés au bloc par adhérence moléculaire qui est une liaison directe entre deux surfaces optiques parfaitement polies, planes et propres, mises en contact intime.

Les électrodes sont utilisées pour établir une décharge électrique continue dans le gaz composé d'un mélange d'hélium et de néon, qui tient lieu de milieu amplificateur pour créer l'effet laser (émission du Néon à 0,633 $\mu$m).

La cathode est généralement une pièce en aluminium présentant une surface émissive suffisante, les anodes sont par exemple constituées de tiges en tungstène, bien que d'autres matériaux métalliques puissent être utilisés pour l'un et l'autre type d'électrode.

Les scellements entre électrodes métalliques et le bloc vitrocéramique des gyromètres laser doivent satisfaire diverses spécifications très sévères, visant essentiellement à assurer la durée de vie des gyromètres lasers dans des conditions d'emploi précises.

- Etanchéité au vide et à l'hélium 10⁻¹¹ atm. cm³ · s⁻¹ aux conditions « normales » de température et de pression.

- Absence de pollution du bloc lors de scellement.

- Température de scellement limitée pour ne pas dégrader les propriétés du matériau vitrocéramique assurant l'intégrité du bloc usiné (température <700 °C par exemple).

- Possibilité de réchauffer ultérieurement le scellement à 200 °C au moins dans la phase de conditionnement du laser (dégazage thermique sous vide pour assurer la durée de vie du laser).

- Durée de vie atteignant selon les applications plus de dix années de stockage ou plus de dix mille heures de fonctionnement.

- Tenue à l'environnement thermique entre - 50 °C et + 100 °C typiquement.

- Tenue aux conditions mécaniques et vibratoires.

Les scellements vitrocéramique-métal pour les électrodes doivent répondre à divers critères de fonctionnement et d'encombrement des électrodes ainsi qu'à des conditions économiques de fabrication.

De nombreuses variantes sont possibles, le scellement métal-vitrocéramique pouvant être effectué directement sur l'électrode ou sur une pièce métallique auxiliaire servant d'enveloppe ou de support à l'électrode proprement dite. Dans ce cas, cette pièce auxiliaire est choisie (matériau, géométrie) pour faciliter le scellement selon la technique utilisée.

La fixation des électrodes métalliques a conduit à mettre au point des techniques de scellement entre métal et vitrocéramique.

La plupart des procédés de réalisation de scellements étanches pour lasers à gaz sont fondés sur l'utilisation d'un joint de scellement constitué d'or et d'indium.

Le brevet US. n° 3 777 281 décrit un procédé de scellement des miroirs ou des électrodes sur un corps de laser stable en matériau à faible coefficient de dilatation.

Les surfaces à sceller reçoivent une couche d'or avant d'être mises en contact intime. Le scellement est produit lorsque le matériau d'un anneau d'indium, placé à l'extérieur et chauffé à sa température de fusion, vient progressivement migrer par capillarité entre les deux surfaces pour former un alliage Au-In qui constitue un joint de scellement de faible épaisseur (≤ 5 $\mu$m).

Ce genre de technique ne répond pas toujours aux conditions d'étanchéité précédemment exprimées.

Le brevet FR. N° 2 473 035 décrit pour une application aux gyromètres laser un procédé de scellement entre un bloc en matériau vitrocéramique et des électrodes métalliques faisant intervenir :

- un dépôt d'or sur la pièce métallique, puis l'application d'une ébauche relativement épaisse d'indium, chauffée à 175 °C sous vide pour former un alliage Au-In à l'interface ;

- un nettoyage de cette surface métallique traitée ainsi que de la surface utile, polie du bloc vitrocéramique, ce nettoyage étant effectué sous vide par bombardement ionique ou exposition à un rayonnement ultra-violet ;

- le pressage entre les deux surfaces ainsi nettoyées et exemptes de toutes impuretés pour effectuer le scellement.

Par ailleurs, le brevet FR. n° 2 502 722 décrit un autre procédé de scellement entre un bloc de vitrocéramique et des électrodes métalliques pour la fabrication des gyromètres laser.

Ce procédé comporte les opérations suivantes :

- dépôt d'une couche d'or sur les éléments en vitrocéramique et en métal, soigneusement usinés ;

- application d'un joint torique en indium pur entre les deux surfaces, puis compression à froid pour former un joint de scellement d'épaisseur voisine de 0,1 mm, ce joint étant étanche à ce stade (5.10⁻¹¹ atm. cm³ · s⁻¹) ;

- chauffage à 140 °C pendant 12 heures de l'ensemble ainsi formé pour favoriser la diffusion de l'indium dans l'or.

Ces divers procédés et, en général, les procédés faisant intervenir la constitution d'un joint de scellement fusible à basse température, par exemple à base d'indium et d'alliages d'indium ont au moins deux inconvénients.

Ils nécessitent de déposer une couche d'or sur les corps à sceller ou au moins sur l'un d'entre eux, et ne permettent pas un réchauffage de l'ensemble scellé à une température suffisante, alors qu'il est souhaitable de pouvoir chauffer à 200 °C au moins, sous vide le laser ou le gyromètre laser lors de son conditionnement, afin de dégazer les impuretés et d'assurer à long terme la propreté du gaz He-Ne utilisé comme milieu amplificateur. Sinon, pour espérer atteindre la durée de vie nécessaire on est contraint d'employer des pièges à impuretés ou « getters », dont l'utilisation présente des inconvénients.

Il existe par ailleurs, un autre procédé de scellement étanche verre-verre ou verre-métal réalisé à plus haute température et connu sous le nom de thermo-compression. Cette technique est décrite, par exemple, au brevet US. n° 2 876 596.

Un joint d'aluminium est porté à une température proche de son point de fusion (500-600 °C), température nécessairement plus faible que le point de ramollissement des corps à sceller. Une pression de quelques 10 MPa est alors exercée entre les pièces à sceller, afin de provoquer une déformation plastique intense de l'aluminium tout en brisant la pellicule d'oxyde (Al$_2$O$_3$) présente à la surface du joint initial. Un joint de scellement en aluminium, d'une épaisseur de l'ordre de 0,1 mm est ainsi formé.

Le brevet FR. n° 2 193 794 décrit également un procédé de scellement étanche en utilisant un joint en aluminium ou en plomb, ou en un alliage de l'un de ces métaux.

Le champ d'application de ce brevet concerne les assemblages entre un objet en métal et un objet en céramique ou en verre, en particulier pour la réalisation de tubes électroniques sous vide (tubes de reproduction d'images, de prises de vues, d'amplificateur d'images à rayons X).

Pour obtenir l'étanchéité à long terme, on insiste dans ce brevet sur la nécessité d'une déformation plastique rapide et intense du joint de scellement, de préférence en moins de 2 secondes pour éviter la présence d'une couche intermédiaire d'oxydes dans l'assemblage formé.

L'article de la revue « Chemical Abstracts », volume 97, n° 12, Septembre 1982, page 307 intitulé « The fabrication of steel-alumina joints by diffusion bonding » décrit la réalisation de liaisons entre acier et alumine à l'aide d'une feuille d'aluminium qui est placée entre les deux surfaces à souder. Cette feuille est déformée avec une contrainte de 50 MPa, le maintien de la pression s'effectuant pendant 30 minutes à 625 °C pour permettre une diffusion de l'aluminium dans l'alumine et dans l'acier.

Le FR-A-2 183 213 décrit un procédé de fixation d'une pièce en céramique à une autre pièce en métal ou en céramique, par assemblage par pression. Ce procédé consiste à disposer entre les surfaces sensiblement planes des deux pièces une feuille intermédiaire en métal malléable et à réaliser une liaison mécanique entre ces pièces en plaçant l'ensemble de ces deux pièces et de la feuille intermédiaire dans une presse qui applique une pression entre 150 Kgf/cm² (14,7 MPa) et 800 Kgf/cm² (78,5 MPa), tout en maintenant cet ensemble à une température qui est inférieure au point de fusion de la feuille intermédiaire et qui est aussi inférieure à celle à laquelle une phase liquide se formerait par interaction des constituants élémentaires sur les surfaces d'assemblage, lesdites pression et température étant appliquées pendant une période inférieure ou égale à 30 secondes pour réaliser l'assemblage.

Il s'agit donc dans ce document d'une technique entrant dans la catégorie des liaisons métallo-céramiques citées plus haut.

L'invention vise à créer un procédé de scellement entre un objet métallique et un objet en matériau vitrocéramique en vue de constituer un laser à gaz ultra-stable, ce procédé étant dépourvu des inconvénients des procédés de la technique antérieure énoncés plus haut.

Elle a donc pour objet un procédé de scellement étanche entre un corps en matériau vitrocéramique et une pièce métallique destinés à entrer dans la construction d'un laser à gaz et en particulier d'un gyromètre laser, caractérisé en ce qu'il consiste à interposer entre les surfaces à sceller du corps en vitrocéramique à base d'une phase cristalline quartzique β et la pièce métallique, un joint de forme annulaire en un métal susceptible de diffuser dans le matériau vitrocéramique et à faire subir à l'ensemble ainsi formé une thermocompression en vue de provoquer une diffusion du matériau du joint dans les surfaces en regard du corps en vitrocéramique et de la pièce métallique.

Le procédé défini ci-dessus s'est avéré être particulièrement efficace pour la réalisation de scellements entre des corps en matériau vitrocéramique Zerodur® et des pièces métalliques en Invar®.

A la connaissance de la Demanderesse, ces phénomènes de diffusion superficielle sont originaux et justifient l'intérêt du procédé de l'invention.

Le phénomène de diffusion de surface de l'aluminium dans la vitrocéramique (Zérodur)® a été constaté par des micro-analyses des interfaces. Le moteur de ce mécanisme de diffusion est le gradient de potentiel chimique engendré par une réaction d'oxydoréduction aux interfaces aluminium-aluminosilicates (phénomènes de surfaces assimilables à ceux donnés par la théorie de Wagner).

La diffusion de l'aluminium dans la vitrocéramique (Zérodur®) semble liée à la nature chimique et cristalline de la vitrocéramique (78 % de phase cristalline quartzique β + 22 % de phase amorphe).

La diffusion de l'aluminium dans la vitrocéramique (Zérodur®) favorisée par certains paramètres de thermocompression (température de liaison, temps de maintien de la pression de déformation du joint en aluminium à la température de liaison, présence d'atmosphère réductrice à l'interface du joint d'aluminium).

Il est important de noter que ce phénomène de diffusion n'a pas été mis en évidence pour des liaisons réalisées par thermocompression d'un joint métallique entre matériaux vitreux de type verre-verre ou silice-silice. De plus, dans le contexte de liaisons d'électrodes sur bloc optique de gyromètres laser, aucun des procédés connus ne permet d'assurer une diffusion du joint de liaison dans le substrat en vitrocéramique.

Il s'agit :

- soit de liaison du type or-indium, où l'indium diffuse dans une couche d'or déposée préalablement sur les interfaces de liaison,
- soit de liaison à basse température (Indium),
- soit de thermocompression entre matériaux vitreux sans maintien de la pression de déformation du joint à la température de liaison pendant un temps important.

Par ailleurs, la présence d'un phénomène de diffusion de l'aluminium dans la vitrocéramique (Zérodur®) autorise des écarts de paramètres et de procédés, par rapport à certaines autres applications de la thermocompression.

Les caractéristiques des liaisons obtenues, particulièrement la tenue mécanique et l'évolution de l'étanchéité après étuvage, peuvent être corrélées aux paramètres de diffusion (température, temps de maintien de la pression de déformation du joint à la température de liaison).

Les liaisons peuvent être réétuvées à une température très proche de la température de liaison sans altérer la qualité de l'étanchéité des liaisons ($\leqslant 10^{-10}$ atm. $cm^3 \cdot s^{-1}$ après traitements thermiques réalisé à 450 °C sous vide de quelques 1,333 $10^{-4}$ Pa pendant 24 heures).

Le phénomène de diffusion de l'aluminium dans la vitrocéramique (Zérodur®) va orienter le choix des paramètres de thermocompression.

Des essais de liaisons réalisées avec des paramètres favorisant la diffusion de l'aluminium dans la vitrocéramique (Zérodur) ont démontré que le procédé de liaison des électrodes de gyromètres laser sur bloc optique par thermocompression était capable de répondre aux spécifications déjà indiquées et tout particulièrement :

- Une étanchéité au vide et à l'hélium de l'ordre de $10^{-11}$ atm. $cm^3 \cdot s^{-1}$.
- Une tenue à des cycles thermiques jusqu'à 200 °C d'où la notion de scellement étanche et étuvable à relativement haute température.

L'invention sera mieux comprise à la lecture de la description qui va suivre de la mise en œuvre du procédé de l'invention, faite en référence aux dessins annexés, donnés uniquement à titre d'exemple et sur lesquels :

- la Fig. 1 est une vue en élévation et en coupe montrant une liaison entre la cathode et le bloc optique d'un gyromètre laser, réalisée suivant l'invention ;
- la Fig. 2 est une vue en élévation et en coupe d'un ensemble d'anode réalisé suivant l'invention.

Un corps monobloc 1 en vitrocéramique constituant le bloc optique du laser est usiné pour obtenir, dans les zones de scellement des électrodes des surfaces polies 2, exemptes de microfissures et grossièrement planes (planéité de quelques μm).

Le bloc 1 subit un nettoyage classique pour pièces optiques avant emploi.

- Une pièce métallique 3 à sceller au bloc est de préférence constituée d'un matériau à faible coefficient de dilatation (alliages Fer-Nickel comme l'Invar® ou Fer-Nickel-Cobalt comme le Kovar® ou Dilver P).

Cette pièce, qui peut être le support de l'électrode proprement dite présente une surface plane, pleine ou annulaire 4 qui sera la face de liaison.

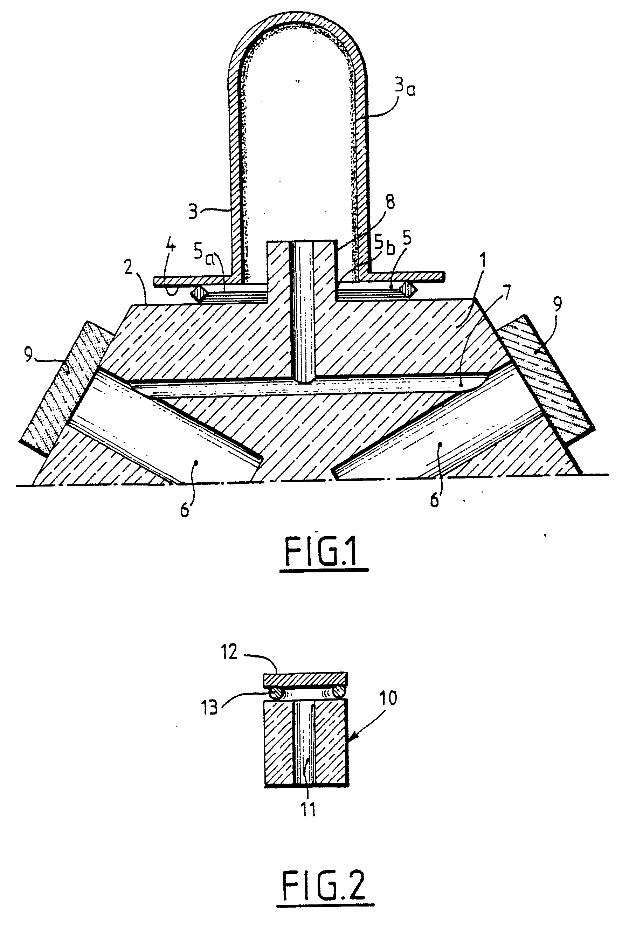

Dans l'exemple de la Fig. 1, il s'agit de l'enveloppe de cathode dans laquelle la cathode 3a en aluminium usinée en une forme cylindro-sphérique est introduite par frettage cryogénique.

Un joint 5 de liaison entre la face 2 du corps 1 et la face 4 de la pièce 3 est de préférence un joint d'aluminium de pureté à 99,5 % ou 99,9 %.

La géométrie du joint 5 en aluminium peut être celle d'un tore obtenu à partir d'un fil dont les extrémités sont taillées en forme de biseau, se recouvrant pour éviter les solutions de continuité gênantes.

Dans l'exemple de la Fig. 1, le joint 5 est usiné ou matricé en une seule pièce circulaire fermée dont la section transversale est polygonale ou carrée afin de faciliter la mise en forme par corroyage. En général, le joint est conçu de façon à obtenir un autocentrage de la pièce métallique sur le joint de liaison. A cet effet, il comporte une fine membrane 5a de centrage venue de matière et présentant un orifice central 5b dans lequel passe le pied de cathode.

Ce joint peut également être réalisé avec des pattes de centrage extérieures obtenues par découpage de la membrane précitée et pliage vers l'extérieur.

Il est avantageusement réalisé de façon que sa section transversale présente une diagonale perpendiculaire aux surfaces de liaison 3 et 4.

Après usinage, le joint subit un dégraissage suivant les gammes classiques de traitements de surfaces, un traitement thermique de recristallisation et un décapage avant emploi. Cette préparation du joint est souhaitable afin d'avoir une diffusion optimum aux interfaces des liaisons vitrocéramique/A5 et (Fer-Nickel)/A5.

Le corps 1 est muni de cavités 6 formant puits de gaz reliés par des canaux capillaires 7, au pied de cathode 8 et débouchant dans l'enveloppe de cathode 3. Des miroirs 9 sont fixés sur les faces obliques du corps 1 en regard du puits de gaz 6.

La phase de liaison proprement dite comprend les étapes suivantes.

a) Mise en place des éléments 1, 3 et 5 à sceller dans des conditions de centrage mécanique adéquat.

b) Chauffage des éléments à une température pouvant varier de 400 °C à 550 °C soit de façon homogène, soit de manière à atteindre la température souhaitée au moins au niveau du joint 5 et des surfaces de liaison 2 et 4.

c) Application en quelques secondes d'une force de déformation du joint provoquant la déformation plastique à chaud rapide de l'aluminium (vitesse de déformation du joint $10^{-4}$ m · $s^{-1}$). La contrainte de déformation du joint peut varier entre 20 et 60 MPa en fonction de la géométrie initiale du joint et de la température de liaison.

d) Maintien de la force de déformation du joint de liaison, à la température de liaison pendant 20 à 40 mn et de préférence 30 mn.

e) Refroidissement lent après retrait de la force de déformation du joint de liaison en aluminium (retour à la température ambiante en quelques heures).

La liaison à l'interface aluminium/alliage métallique du porte-électrode 3 s'effectue aussi par un mécanisme de diffusion du joint en aluminium dans l'alliage. Cette préparation de surface favorise la diffusion à l'interface de liaison.

Au cours de cette phase de liaison, les pièces sont placées dans une atmosphère environnante évitant les oxydations des interfaces de liaison, particulièrement de l'interface du support d'électrode (Fe-Ni). Cette atmosphère peut être une atmosphère réductrice d'azote-hydrogène 90-10 ou un vide primaire.

Les paramètres de liaison tels que température, temps de maintien de la force de déformation du joint, atmosphère environnante aux surfaces de liaison conditionnent la formation de la couche superficielle de diffusion de l'aluminium aux interfaces de liaison (vitrocéramique, Fer-Nickel, ou Fer-Nickel-Cobalt).

Des essais ont montré l'influence de la température de liaison, et du maintien de la force de déformation du joint à cette température sur la profondeur de diffusion de l'aluminium dans la vitrocéramique et l'alliage (Fer-Nickel ou Fer-Nickel-Cobalt).

L'obtention de liaisons étanches, reproductibles à un niveau d'étanchéité ≤ $10^{-11}$ atm. $cm^3 \cdot s^{-1}$, pour des températures de liaison allant jusqu'à 400-450 °C est favorisée par le phénomène de diffusion superficielle aux interfaces de liaison, qui consolide l'adhérence du joint.

Ultérieurement, l'ensemble des pièces ainsi scellé subit un traitement thermique permettant une relaxation des contraintes engendrées dans le plan de liaison par dilatation différentielle des deux corps scellés 1 et 3, ceux-ci ayant un coefficient de dilatation moyen très différent l'un de l'autre puisque la vitrocéramique reste pratiquement sans modification dimensionnelle à 550 °C.

On obtient un joint déformé, annulaire dont la largeur est de 2 à 3 mm et l'épaisseur 0,1 à 0,15 mm.

La procédure indiquée peut être différente dans la mesure où le phénomène de diffusion observé augmente la qualité d'adhésion du joint de liaison. Des essais de liaisons réalisées par thermocompression sans palier thermique de diffusion avec maintien de la force de déformation du joint, mais avec un traitement thermique de diffusion réalisé à la température de liaison sous un vide de quelques 1,333 $10^{-4}$ Pa pendant plusieurs heures, montrent qu'il est possible d'obtenir des liaisons entre la vitrocéramique et l'alliage Fer-Nickel ou Fer-Nickel-Cobalt avec un joint d'aluminium. Dans ce cas, la profondeur de diffusion est plus importante (20 μm ≈) dans le porte-électrode métallique 3 (Fer-Nickel-Cobalt ou Fer-Nickel) que dans la vitrocéramique du corps 1 (≈ 1 μm).

Dans les conditions de procédures habituelles citées précédemment, la profondeur de diffusion dans la vitrocéramique (Zérodur[b]) et dans l'alliage métallique Fer-Nickel ou Fer-Nickel-Cobalt est de quelques microns (≈ 1 à 4 μm).

Sur la Fig. 2, l'invention est considérée comme étant appliquée à la réalisation du scellement entre un support 10 en matière vitrocéramique pourvu d'un conduit capillaire 11 et une pastille métallique d'anode 12.

Ici le joint 13 utilisé est un joint torique en Aluminium.

Les conditions de réalisation de ce scellement sont semblables à celles indiquées en référence à la réalisation du joint de la Fig. 1.

On peut envisager des évolutions de la forme du joint de liaison 5 en aluminium qui peut aussi être une feuille.

On peut également employer d'autres métaux que l'aluminium pour réaliser le joint de liaison.

Ces matériaux peuvent être :

- le zinc et des alliages de zinc du type Zamak[b] 5,

- des alliages plomb-étain, plomb-étain-argent.

## Revendications

1. Procédé de scellement étanche entre un corps (1 ; 10) en matériau vitrocéramique et une pièce métallique (3 ; 12) destinés à entrer dans la construction d'un laser à gaz et en particulier d'un gyromètre laser, caractérisé en ce qu'il consiste à interposer entre les surfaces à sceller du corps en vitrocéramique (1 ; 10) à base d'une phase cristalline quartzique β et la pièce métallique (3 ; 12), un joint (5 ; 13) de forme annulaire en un métal susceptible de diffuser dans le matériau vitrocéramique et à faire subir à l'ensemble ainsi formé une thermocompression en vue de provoquer une diffusion du matériau du joint (5 ; 13) dans les surfaces en regard du corps en vitrocéramique et de la pièce métallique.

2. Procédé suivant la revendication 1, caractérisé en ce que le joint utilisé est de forme torique, obtenu à partir d'un fil dont les extrémités sont taillées en forme de biseau se recouvrant pour éviter les solutions de continuité.

3. Procédé suivant la revendication 1, caractérisé en ce que le joint (5) est réalisé en une seule pièce annulaire fermée de section transversale polygonale, par matriçage ou usinage, et comporte une membrane de centrage (5a) venue de matière et présentant un orifice central (5b).

4. Procédé suivant la revendication 3, caractérisé en ce que le joint (5) est de section transversale carrée, une diagonale du carré étant perpendiculaire au plan de joint.

5. Procédé suivant l'une des revendications 3 et 4, caractérisé en ce qu'il comporte des pattes de centrage extérieures obtenues par découpage de la membrane et pliage vers l'extérieur.

6. Procédé suivant l'une quelconque des revendications précédentes, caractérisé en ce que le joint (5 ; 13) est en aluminium.

7. Procédé suivant l'une quelconque des revendications précédentes, caractérisé en ce que le joint (5 ; 13) est en zinc, en alliage de zinc, du type Zamak®5, en un alliage de plomb-étain ou de plomb-étain-argent.

8. Procédé suivant l'une quelconque des revendications 1 à 7, caractérisé en ce qu'il consiste à mettre en place les éléments (1, 3, 5) à sceller dans des conditions de centrage mécanique adéquat, à chauffer lesdits éléments à une température de 400 °C à 550 °C soit de façon homogène, soit de manière à atteindre la température souhaitée au moins au niveau du joint (5) et des surfaces de liaison (2, 4) desdites pièces (1, 3), à appliquer en quelques secondes une force de déformation du joint (5) pour assurer la déformation plastique à chaud rapide du matériau du joint, à maintenir la force de déformation du joint de liaison à la température de liaison pendant une durée de 20 à 40 mn et après retrait de la force de déformation du joint de liaison, à laisser refroidir lentement pour un retour à la température ambiante en plusieurs heures.

9. Procédé suivant l'une des revendications 1 à 8, caractérisé en ce que le joint (5 ; 13) subit à l'issue de sa fabrication un traitement thermique de recristallisation et un décapage avant emploi.

10. Procédé suivant l'une quelconque des revendications 1 à 9, caractérisé en ce que l'ensemble scellé des pièces est soumis à un traitement thermique destiné à assurer une relaxation des contraintes engendrées dans le plan de liaison par dilatation différentielle des corps scellés (1, 3).

## Claims

1. Process for leakproof sealing between a body (1 ; 10) made of vitroceramic material and a metal component (3 ; 12) which are intended to form part of the construction of a gas laser and particularly of a laser gyrometer, characterized in that it involves interposing between the surfaces to be sealed of the body (1 ; 10) made of vitroceramic based on a β-quartz crystalline phase and the metal component (3 ; 12) a seal (5 ; 13) of annular form, made of a metal capable of diffusing into the vitroceramic material, and subjecting the assembly so formed to thermocompression in order to cause a diffusion of the material of the seal (5 ; 13) into the mutually confronting surfaces of the vitroceramic body and of the metal component.

2. Process according to Claim 1, characterized in that the seal used is of toroidal form, obtained from a wire, the ends of which are bevelled and overlap in order to prevent gaps.

3. Process according to Claim 1, characterized in that the seal (5) is produced as a single closed annular piece of polygonal cross-section by die stamping or machining and possesses a centring membrane (5a) produced integrally and having a central orifice (5b).

4. Process according to Claim 3, characterized in that the seal (5) is of square cross-section, one diagonal of the square being perpendicular to the joining plane.

5. Process according to one of Claims 3 and 4, characterized in that it possesses outer centring tabs obtained by cutting out from the membrane and bending outwards.

6. Process according to any one of the preceding claims, characterized in that the seal (5 ; 13) is made of aluminium.

7. Process according to any one of the preceding claims, characterized in that the seal (5 ; 13) is made of zinc, a zinc alloy of the Zamak⁸ 5 type, a lead/tin alloy or a lead/tin/silver alloy.

8. Process according to any one of Claims 1 to 7, characterized in that it involves installing the elements (1, 3, 5) to be sealed under conditions of suitable mechanical centring, heating the said elements to a temperature of 400 °C to 550 °C either uniformly or so as to reach the desired temperature at least at the seal (5) and at the connecting surfaces (2, 4) of the said elements (1, 3), exerting a deforming force on the seal (5) for a few seconds in order to obtain a rapid hot plastic deformation of the material of the seal, continuing to exert the deforming force on the connecting seal at the connection temperature for a period of 20 to 40 minutes, and, after relieving the connecting seal of the deforming force, allowing slow cooling in order to return to the ambient temperature within several hours.

9. Process according to one of Claims 1 to 8, characterized in that the seal (5 ; 13), at the end of its production, undergoes thermal recrystallization treatment and pickling before use.

10. Process according to any one of Claims 1 to 9, characterized in that the sealed assembly of the components is subjected to thermal treatment intended to obtain a relief of the stresses generated in the joining plane as a result of the differential expansion of the sealed bodies (1, 3).

## Patentansprüche

1. Verfahren zum dichten Verschmelzen eines Körpers (1 ; 10) aus einem glaskeramischen Werkstoff mit einem Metallteil (3 ; 12), die für den Bau eines Gaslasers, insbesondere eines Lasergyrometers bestimmt sind, dadurch gekennzeichnet, daß zwischen die zu verschmelzenden Flächen des Körpers (1 ; 10) aus Glaskeramik auf der Basis einer β-Quarzkristallphase und das Metallteil (3 ; 12) ein Ring (5 ; 13) aus einem Metall, das in den glaskeramischen Werkstoff eindiffundieren kann, eingelegt wird und die so gebildete Einheit einer Thermokompression unterzogen wird, um die Diffusion des Werkstoffs des Rings (5 ; 13) in die einander gegenüberliegenden Flächen des Körpers aus Glaskeramik und des Metallteils zu bewirken.

2. Verfahren nach Anspruch 1, dadurch gekennzeichnet, daß der benutzte Ring eine torische Form hat und aus einem Draht hergestellt wird, dessen Enden schräg zugeschnitten sind und sich überlappen, um Unterbrechungen der Kontinuität zu vermeiden.

3. Verfahren nach Anspruch 1, dadurch gekennzeichnet, daß der Ring (5) aus einem einzigen, geschlossenen ringförmigen Teil mit polygonalem Querschnitt durch Prägung oder spanende Bearbeitung hergestellt wird und eine mit ihm aus einem Stück bestehende Zentriermembran (5a) mit einer zentralen Öffnung (5b) aufweist.

4. Verfahren nach Anspruch 3, dadurch gekennzeichnet, daß der Ring (5) einen quadratischen Querschnitt hat, wobei eine Diagonale des Quadrats zur Ebene des Rings senkrecht ist.

5. Verfahren nach einem der Ansprüche 3 und 4, dadurch gekennzeichnet, daß er äußere Zentrierlappen besitzt, die durch Ausstanzen der Membran und Biegen nach außen gebildet sind.

6. Verfahren nach einem der vorhergehenden Ansprüche, dadurch gekennzeichnet, daß der Ring (5 ; 13) aus Aluminium besteht.

7. Verfahren nach einem der vorhergehenden Ansprüche, dadurch gekennzeichnet, daß der Ring (5 ; 13) aus Zink, aus einer Zinklegierung vom Typ Zamak[a] 5, aus einer Blei-Zinn- oder Blei-Zinn-Silber-Legierung besteht.

8. Verfahren nach einem der Ansprüche 1 bis 7, dadurch gekennzeichnet, daß die zu verschmelzenden Elemente (1, 3, 5) mechanisch entsprechend zentriert in Stellung gebracht werden, daß diese Elemente auf eine Temperatur von 400 bis 550 °C erhitzt werden, und zwar entweder homogen oder so, daß die gewünschte Temperatur wenigstens in Höhe des Rings (5) und der Verbindungsflächen (2, 4) dieser Teile (1, 3) erreicht wird, daß in einigen Sekunden eine Kraft zur Verformung des Rings (5) ausgeübt wird, um die schnelle plastische Warmverformung des Werkstoffs des Rings zu bewirken, daß die Kraft zur Verformung des Verbindungsrings bei der Verbindungstemperatur während einer Dauer von 20 bis 40 min aufrechterhalten wird und daß man nach Nachlassen der Kraft zur Verformung des Verbindungsrings langsam abkühlen läßt, um in mehreren Stunden die Umgebungstemperatur wieder zu erreichen.

9. Verfahren nach einem der Ansprüche 1 bis 8, dadurch gekennzeichnet, daß der Ring (5 ; 13) nach seiner Herstellung einer thermischen Rekristallisationsbehandlung unterzogen wird und vor Verwendung dekapiert wird.

10. Verfahren nach einem der Ansprüche 1 bis 9, dadurch gekennzeichnet, daß die verschmolzene Einheit thermisch behandelt wird, um die in der Verbindungsebene durch unterschiedliche Ausdehnung der verschmolzenen Körper (1, 3) erzeugten Spannungen zu entspannen.

FIG.1

FIG.2